# EUROPÄISCHE PATENTSCHRIFT

(11) **EP 4 260 037 B1**
(45) Veröffentlichungstag und Bekanntmachung des Hinweises auf die Patenterteilung: **16.09.2026**
(21) Anmeldenummer: 21819841.4
(22) Anmeldetag: 26.11.2021
(51) Int. Cl.: G01L 19/06, G01L 13/02

(54) **DIFFERENZDRUCKMESSAUFNEHMER MIT ÜBERLASTSCHUTZ**
DIFFERENTIAL PRESSURE MEASURING SENSOR WITH OVERLOAD PROTECTION
CAPTEUR DE MESURE DE PRESSION DIFFÉRENTIELLE DOTÉ D'UNE PROTECTION CONTRE LES SURCHARGES

(30) Priorität: 10.12.2020 DE 102020132960
(43) Veröffentlichungstag der Anmeldung: 18.10.2023
(73) Patentinhaber: Endress+Hauser SE+Co. KG, 79689 Maulburg (DE)
(72) Erfinder: UEHLIN, Thomas, 79650 Schopfheim (DE); GETMAN, Igor, 79539 Lörrach (DE); MACK, Benjamin, 79539 Lörrach (DE)
(74) Vertreter: Endress + Hauser Group Services (Deutschland) AG+Co. KG
(86) Internationale Anmeldenummer: PCT/EP2021/083114
(87) Internationale Veröffentlichungsnummer: WO 2022/122411

(56) Entgegenhaltungen:
- DE-A1- 102014 212 766
- US-A1- 2018 259 414

## Beschreibung

Die vorliegende Erfindung betrifft einen Differenzdruckmessaufnehmer mit Überlastschutz. Gattungsgemäße Differenzdruckmessaufnehmer umfassen gewöhnlich einen Messwerkkörper mit einer ersten Druckeingangsöffnung und einer zweiten Druckeingangsöffnung, von der sich jeweils ein hydraulischer Pfad zu einem Differenzdruckmesswandler erstreckt, um den Differenzdruckmesswandler mit dem ersten Druck und dem zweiten Druck zu beaufschlagen, deren Differenz durch den Differenzdruckmesswandler zu messen ist. Ein Differenzdruckmesswandler weist allgemein einen Verformungskörper, insbesondere eine Messmembran auf, deren Seiten jeweils mit einem der beiden Drücke beaufschlagbar ist, so dass die Messmembran eine von der Differenz der beiden Drücke abhängige, elastische Verformung aufweist. Die Druckeingangsöffnungen des Messwerkkörpers sind gewöhnlich durch flexible metallische Trennmembranen unter Bildung von Trennmembrankammern verschlossen, welche jeweils einen an einer Außenseite der Trennmembran anstehenden Druck in die Trennmembrankammern und den angeschlossenen hydraulischen Pfad einleiten. Bei Messwerken mit koplanaren Druckeingangsöffnungen liegen die Druckeingänge nebeneinander auf einer Prozessanschlussfläche des Messwerkkörpers. Solche Messwerke mit koplanaren Druckeingängen sind beispielsweise in EP 0 370 013 B1, EP 0 560 875 B1, EP 0 774 652 B2, EP 1 216 404 B1 und WO 2014/095417 A1 offenbart. Differenzdruckmesszellen sind gewöhnlich darauf optimiert geringe Druckdifferenzen p1-p2 bei großen statischen Drücken p1, p2 zu messen. Hierbei ist es wichtig, die richtige Balance zwischen Empfindlichkeit und Überlastfestigkeit zu finden. So kann beispielsweise für den Messbereich der Druckdifferenz |p1-p2| gelten $2 \left|p1-p2\right| / \left(p1+p2\right) < 1 % .$

Wenn in einer Prozessanlage einer der Drücke p1, p2 entfällt, wird die Messzelle mit dem 100-fachen des Messbereichs belastet, was den Druckmesswandler zerstören könnte, weshalb er zu schützen ist. Ein bewährter Schutz beruht darauf, eine beidseitig auslenkbare Überlastmembran zum Messzelle parallel zu schalten. Eine solche Überlastmembran weist eine hinreichend große hydraulische Kapazität auf, um im Falle einer einseitigen Überlast das Volumen einer Übertragungsflüssigkeit in einem hydraulischen Pfad so weit aufzunehmen, dass die Trennmembran dieses hydraulischen Pfads an einem Membranbett zur Anlage kommt, so dass ein weiterer Anstieg des auf die Differenzdruckmesszelle wirkenden Differenzdrucks zuverlässig verhindert ist. Beispiele für Differenzdruckmessaufnehmern mit beidseitig wirksamen Überlastmembranen sind in EP 1 299 701 B1, DE 10 2006 040 325 A1, DE 10 2006 057 828 A1, WO 2014/095417 A1 und US 10,627,302 B2 offenbart.

Als Alternative zu einer beidseitig auslenkbaren Überlastmembran sind zwei entgegengesetzt vorgespannte Überlastmembranen beschrieben, die jeweils auf eine einseitige Überlast reagieren, wie in DD 279 065 A1, DD 287 328 A5, DD 290 716 A5, DE 32 22 620 A1 und US 10,656,039 B2 beschrieben ist. Um dieses Prinzip zuverlässig umzusetzen, muss gewährleistet werden, dass die Überlastmembran möglichst erst bei Druckdifferenzen außerhalb des Messbereichs ausgelenkt werden, wobei der erforderliche Volumenhub der Überlastmembran dann dem gesamten Volumen der Trennmembrankammer entspricht, wobei durch die erforderliche Auslenkung allenfalls vernachlässigbare plastische Verformungen auftreten dürfen. Weiterhin soll die Überlastmembran die Trennmembran im Fall einer einseitigen Überlast auf der Hochdruckseite abstützen, wenn alles Öl aus der hochdruckseitigen Trennmembrankammer verdrängt ist, um eine plastische Verformung der Trennmembran zu verhindern. Hierzu muss die Überlastmembran eine der Kontur der Trennmembran entsprechende Kontur aufweisen, die beispielsweise durch Prägen einer Überlastmembranronde mit einer Matrize präpariert wird, wie dies für die Überlastmembranen gemäß US 10,656,039 B2 der Fall sein dürfte. Die resultierende Wellenkontur der Überlastmembran soll nach US 10,656,039 B2 zudem einen größeren axialen Hub aufweisen als eine koaxiale Wellenkontur an der Oberfläche des Messwerkkörpers, an welcher die Überlastmembran abschnittsweise anliegt. Dies erfordert erstens einen sehr aufwändigen Herstellungsprozess und zweitens sind die verschiedenen Anforderungen an die Überlastmembran kaum miteinander vereinbar, insbesondere dann, wenn der Differenzdruckmessaufnehmer so kompakt gebaut sein soll, dass er zum koplanaren Prozessanschluss des Differenzdruckmessaufnehmers 3051 der Firma Rosemount kompatibel ist. Es ist daher die Aufgabe der vorliegenden Erfindung, einen Differenzdruckmessaufnehmer bereitzustellen, der einen zuverlässigen Überlastschutz gewährleistet. Die Aufgabe wird erfindungsgemäß gelöst durch den Differenzdruckmessaufnehmer nach Patentanspruch 1.

Der erfindungsgemäße Differenzdruckmessaufnehmer mit Überlastschutz, umfasst: einen Messwerkkörper; eine erste Trennmembran; eine zweite Trennmembran; eine erste Überlastmembran; eine zweite Überlastmembran; einen Differenzdruckmesswandler zum Wandeln einer Druckdifferenz in ein elektrisches Signal; einen ersten hydraulischen Pfad; und einen zweiten hydraulischen Pfad; wobei die erste Überlastmembran unter Bildung einer ersten Überlastkammer mit variablem Volumen entlang eines umlaufenden ersten Überlastmembranrandes mit dem Messwerkkörper verbunden ist; wobei die zweite Überlastmembran unter Bildung einer zweiten Überlastkammer mit variablem Volumen entlang eines umlaufenden zweiten Überlastmembranrandes mit dem Messwerkkörper verbunden ist; wobei die erste Trennmembran unter Bildung einer ersten Trennmembrankammer entlang eines umlaufenden ersten Trennmembranrandes mit dem Messwerkkörper verbunden ist, wobei die erste Überlastmembran zwischen dem Messwerkkörper und der ersten Trennmembran eingeschlossen ist; wobei die zweite Trennmembran unter Bildung einer zweiten Trennmembrankammer entlang eines umlaufenden zweiten Trennmembranrandes mit dem Messwerkkörper verbunden ist, wobei die zweite Überlastmembran zwischen dem Messwerkkörper und der zweiten Trennmembran eingeschlossen ist; wobei die erste Trennmembrankammer über den ersten hydraulischen Pfad, der zumindest abschnittsweise durch den Messwerkkörper verläuft, mit der zweiten Überlastkammer hydraulisch verbunden ist; wobei die zweite Trennmembrankammer über den zweiten hydraulischen Pfad, der zumindest abschnittsweise durch den Messwerkkörper verläuft, mit der ersten Überlastkammer hydraulisch verbunden ist; wobei der Differenzdruckmesswandler mit der ersten Trennmembrankammer und der zweiten Trennmembrankammer hydraulisch verbunden ist; wobei die erste Überlastmembran eine erste Basisfläche aufweist, welche einer ersten Gegenfläche in der ersten Überlastkammer zugewandt ist; wobei die zweite Überlastmembran eine zweite Basisfläche aufweist, welche einer zweiten Gegenfläche in der zweiten Überlastkammer zugewandt ist; wobei die erste Überlastmembran im betriebsbereiten Zustand bei Druckgleichgewicht, also einer Druckdifferenz von Null gegen die erste Gegenfläche vorgespannt ist, so dass die erste Basisfläche zumindest abschnittsweise an der ersten Gegenfläche anliegt; wobei die zweite Überlastmembran gegen die zweite Gegenfläche vorgespannt ist, so dass die zweite Basisfläche zumindest abschnittsweise an der zweiten Gegenfläche anliegt; wobei die erste Überlastmembran eine radial veränderliche erste Materialstärke h(r) aufweist; und wobei die zweite Überlastmembran eine radial veränderliche erste Materialstärke h(r) aufweist.

In einer Weiterbildung der Erfindung weist die erste Überlastmembran eine der Trennmembran zugewandte Membranbettfläche mit einer durch spanende oder umformende Bearbeitung präparierten Kontur k(r) auf. Diese Art der Präparation gewährt mehr Freiheitsgrade als das übliche Abprägen eines Membranrohlings auf einer Matrize, wobei naturgemäß der axiale Abstand zwischen lokalen Maxima und benachbarten lokalen Minima durch die ursprüngliche Stärke des Materials der Überlastmembran beschränkt ist.

Gemäß der Erfindung weist die Materialstärke h(r) der ersten Überlastmembran in einem radialen Bereich 0 < r < 0,9 R, lokale Maxima und Minima auf, wobei eine Differenz zwischen einem lokalen Maximum und einem lokalen Minimum der Materialstärke der Überlastmembran nicht weniger als zwei, insbesondere nicht weniger als drei Materialstärken der ersten Trennmembran beträgt, und/oder wobei ein Betrag einer Differenz eines lokalen Maximums der Materialstärke der Überlastmembran und einer über den radialen Bereich entlang des Radius gemittelten Materialstärke der Überlastmembran nicht weniger als eine Materialstärke, insbesondere nicht weniger als drei halbe Materialstärken der Trennmembran beträgt.

In einer Weiterbildung der Erfindung weist die Materialstärke h(r) der Überlastmembran nicht weniger als 4, insbesondere nicht weniger als 6 lokale Maxima auf.

In einer Weiterbildung der Erfindung weist die erste Überlastmembran eine der ersten Gegenfläche zugewandte erste Basisfläche und eine der ersten Trennmembran zugewandte erste Membranbettfläche auf, wobei die erste Membranbettfläche eine erste Membranbettkontur mit einer axialen Koordinate k(r) aufweist um die erste Trennmembran im Falle einer einseitigen Überlast abzustützen, wobei im betriebsbereiten Zustand bei Druckgleichgewicht, also einer Druckdifferenz von Null für die zweite Ableitung der axialen Koordinate k(r) der ersten Membranbettkontur nach dem Radius d²k/dr² und die zweite Ableitung der ersten Materialstärke h(r) der ersten Überlastmembran nach dem Radius d²h/dz² gilt: $\frac{{\int }_{0}^{g ⋅ R} \frac{{d}^{2} k \left(r\right)}{{dr}^{2}} ⋅ \frac{{d}^{2} h \left(r\right)}{{dr}^{2}} dr}{{\int }_{0}^{g ⋅ R} {\left(\frac{{d}^{2} h \left(r\right)}{{dr}^{2}}\right)}^{2} dr} = T$ wobei g ein Faktor ist, der eine Schranke für die Integration definiert, wobei gilt 0,9 ≤ g ≤ 1 wobei T eine dimensionslose Kennzahl ist, die nicht weniger als 0,9 und insbesondere nicht weniger als 0,95 beträgt.

In einer Weiterbildung der Erfindung weist die erste Basisfläche eine axiale Koordinate b(r) auf, wobei im betriebsbereiten Zustand bei Druckgleichgewicht, also einer Druckdifferenz von Null für die zweite Ableitung der axialen Koordinate b(r) nach dem Radius d²b/dr² gilt: $\frac{{\int }_{0}^{g ⋅ R} \frac{{d}^{2} h \left(r\right)}{{dr}^{2}} ⋅ \frac{{d}^{2} b \left(r\right)}{{dr}^{2}} dr}{{\int }_{0}^{g ⋅ R} {\left(\frac{{d}^{2} h \left(r\right)}{{dr}^{2}}\right)}^{2} dr} = U$ wobei U eine dimensionslose Kennzahl ist, die nicht mehr als 0,2, beispielsweise nicht mehr als 0,1 und insbesondere nicht mehr als 0,05 beträgt.

In einer Weiterbildung der Erfindung weist die erste Überlastmembran, einen ersten zentralen Bereich (C) auf, dessen äußerer Radius r nicht weniger als 30% insbesondere nicht weniger als 40% des Radius R der Überlastmembran beträgt, wobei an den zentralen Bereich (C) ein erster Übergangsbereich (B) anschließt, der sich über nicht weniger als 20%, beispielsweise nicht weniger als 30% des Radius (R) der ersten Überlastmembran erstreckt, wobei die axiale Koordinate der Basisfläche b(r) im nicht eingebauten Gleichgewichtszustand der ersten Überlastmembran im erste Übergangsbereich (B) eine größere mittlere dimensionslose Steigung R / hₘₐₓ(B) · db(r)/dr aufweist als der erste zentrale Bereich, wobei hₘₐₓ(B) die maximale Stärke der Überlastmembran im Übergangsbereich (B) ist.

In einer Weiterbildung der Erfindung beträgt eine mit linearer Regression im nicht eingebauten Gleichgewichtszustand der ersten Überlastmembran ermittelte dimensionslose mittlere Steigung R / hₘₐₓ(B) · db(r)/dr des ersten Übergangsbereichs nicht weniger als 1,5 insbesondere nicht weniger als 2.

In einer Weiterbildung der Erfindung weist der erste Übergangsbereich (B) im nicht eingebauten Gleichgewichtszustand der ersten Überlastmembran eine Kegelstumpfform auf.

In einer Weiterbildung der Erfindung schließt an den ersten Übergangsbereich radial auswärts ein erster Randbereich (A) an, wobei der erste Randbereich im nicht eingebauten Gleichgewichtszustand der ersten Überlastmembran eine mittlere Steigung 1/(h R) dz(r)/dr aufweist, die nicht mehr als ein Viertel, beispielsweise nicht mehr als ein Achtel der mittleren Steigung des Übergangsbereichs beträgt.

In einer Weiterbildung der Erfindung weist die erste Basisfläche im nicht eingebauten Zustand der ersten Überlastmembran eine Gleichgewichtsform auf, für deren radiusabhängige axiale Koordinate g(r) eine mit linearer Regression ermittelte Gleichgewichtsnäherungsfunktion GN(r) existiert; wobei die erste Basisfläche im eingebauten betriebsbereiten Zustand der Überlastmembran eine Form aufweist, für deren radiusabhängige axiale Koordinate b(r) eine mit linearer Regression ermittelte Betriebsnäherungsfunktion BN(r) existiert; wobei die Steigung der Betriebsnäherungsfunktion BN(r) nicht mehr als drei Viertel, und insbesondere nicht mehr als die Hälfte der Steigung der Gleichgewichtsnäherungsfunktion GN(r) beträgt.

In einer Weiterbildung der Erfindung ist für den Differenzdruckmessaufnehmer ein Differenzdruckmessbereich spezifiziert, wobei die erste Überlastmembran in einem solchen Maß gegen die Gegenfläche vorgespannt ist, dass bei einer Temperatur von 300 K und einem Differenzdruck, der dem Maximalwert des Differenzdruckmessbereichs entspricht, ein Volumenhub der ersten Überlastmembran nicht mehr als 10% insbesondere nicht mehr als 5% des bei Druckgleichgewicht und Normaldruck in der zweiten Trennmembrankammer enthaltenen Ölvolumens entspricht.

In einer Weiterbildung der Erfindung weist die erste Überlastmembran einen Stahl, insbesondere einen kalt gewalzten Stahl der Sorte 1.4310 oder 1.8159 auf.

In einer Weiterbildung der Erfindung In einer Weiterbildung der Erfindung ist die die erste Überlastmembran erhältlich durch ein Verfahren, das Vergüten, also Glühen und Abschrecken umfasst.

In einer Weiterbildung der Erfindung weist die erste Überlastmembran einen wirksamen Durchmesser von nicht mehr als 27 mm, insbesondere nicht mehr als 25 mm auf. Der wirksame Durchmesser begrenzt den auslenkbaren Bereich der Überlastmembran. Er ist durch einen Innenrand einer Fügestelle definiert, mit dem die Überlastmembran am Gegenkörper befestigt ist.

In einer Weiterbildung der Erfindung ist die zweite Überlastmembran im Wesentlichen baugleich mit der ersten Überlastmembran.

In einer Weiterbildung der Erfindung verlaufen die Gegenflächen jeweils im Wesentlichen parallel zu den Basisflächen der Überlastmembranen.

In einer Weiterbildung der Erfindung betragen die zwischen den Gegenflächen und den Basisflächen eingeschlossenen im betriebsbereiten Zustand bei Druckgleichgewicht, also einer Druckdifferenz von Null jeweils nicht mehr als 20 µl, insbesondere nicht mehr als 10 µl.

In einer Weiterbildung der Erfindung weist der Messwerkkörper eine Prozessanschlussfläche mit einer ersten Drucköffnung und einer zweiten Drucköffnung auf, wobei die erste Trennmembran durch die erste Drucköffnung mit einem ersten Mediendruck beaufschlagbar ist, und wobei die zweite Trennmembran durch die zweite Drucköffnung mit einem zweiten Mediendruck beaufschlagbar ist, und wobei die beiden Trennmembranen koplanar zueinander angeordnet sind.

In einer Weiterbildung der Erfindung weist der Messwerkkörper eine erste Membranträgerfläche und eine zweite Membranträgerfläche auf, wobei die erste Trennmembran auf der ersten Membranträgerflächen und die zweite Trennmembran 240 auf der zweiten Membranträgerfläche angeordnet ist, wobei die beiden Membranträgerflächen einander abgewandt sind.

Die Erfindung wird im Folgenden anhand der in den Zeichnungen dargestellten Ausführungsbeispiele näher erläutert. Es zeigt:
- Fig. 1: eine schematische Darstellung des Wirkprinzips des erfindungsgemäßen Differenzdruckmessaufnehmers;
- Fig. 2a:: einen Längsschnitt einer Überlastmembran in der Gleichgewichtslage;
- Fig. 2b:: einen Längsschnitt einer über dem Gegenkörper positionierten Überlastmembran in der Gleichgewichtslage;
- Fig. 2c:: einen Längsschnitt einer Trennmembrankammer und einer Überlastkammer im betriebsbereiten Zustand bei Druckgleichgewicht, also einer Druckdifferenz von Null;
- Fig. 2d:: einen Längsschnitt einer Trennmembrankammer und einer Überlastkammer im Überlastfall;
- Fig. 3a:: ein Diagramm des Volumenhubs der Überlastmembran als Funktion einer Druckdifferenz an der Überlastmembran;
- Fig. 3b:: ein Diagramm der maximalen mechanischen Spannungen der Überlastmembran als Funktion einer Druckdifferenz an der Überlastmembran.

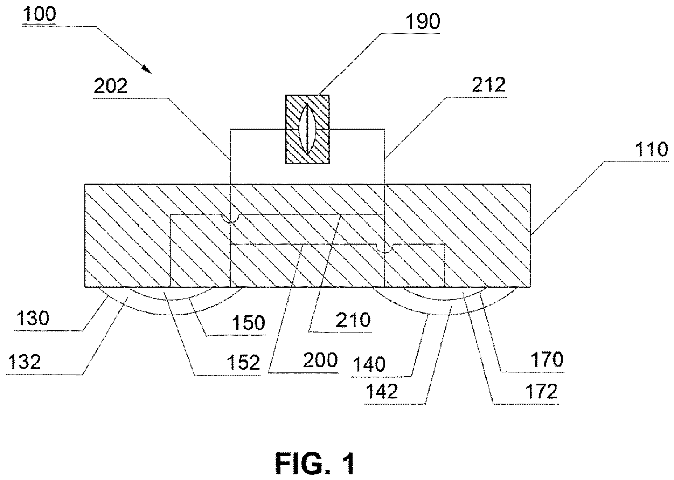

Die schematische Darstellung in Fig. 1 zeigt, wie die verschiedenen Komponenten eines Ausführungsbeispiels eines erfindungsgemäßen Messaufnehmers hydraulisch gekoppelt sind, um ihre Wirkung zu entfalten. Der Differenzdruckmessaufnehmer 100 weist einen metallischen Messwerkkörper 110 auf, an dem, eine erste Trennmembran 130 und eine zweite Trennmembran 140 unter Bildung einer ersten bzw. zweiten Trennmembrankammer 132, 142 mit einer umlaufenden Fügestelle befestigt sind. Innerhalb der Trennmembrankammern 132, 142, ist jeweils eine erste bzw. zweite Überlastmembran 150, 170 angeordnet, die unter Bildung einer ersten bzw. zweiten Überlastkammer 152, 172 mit einer umlaufenden Fügestelle an dem Messwerkkörper 110 befestigt sind. Die beiden Trennmembranen 130, 140 weisen einen Stahl insbesondere einen Edelstahl oder Federstahl in einer Materialstärke von weniger als 100 µm, beispielsweise 30 µm auf, wobei den Membranen eine Kontur aufgeprägt, um die Linearität des Zusammenhangs einer Druckdifferenz zwischen den beiden Trennmembran und dem resultierenden Volumenhub der Trennmembran zu verbessern. Der Durchmesser der Trennmembranen kann beispielsweise 25 bis 30 mm betragen. Im Ergebnis sind die Trennmembranen sehr weich und können mit geringen geringen Druckdifferenzen abhängig von deren Vorzeichen zu beiden Seiten hin ausgelenkt werden.

Die beiden Überlastmembranen 150, 170 weisen einen etwas kleineren Durchmesser auf als die Trennmembranen 130, 140, wobei der wirksame Durchmesser insbesondere 22 bis 26 mm betragen kann. Sie weisen zudem eine größere Ausgangsmaterialstärke auf, je nach Messbereich beispielsweis 200 bis 1000 µm, im Beispiel 700 µm, so dass die Überlastmembranen 150, 170 um ein Vielfaches, steifer sind als die Trennmembranen 130, 140, insbesondere mehr als das 1000-fache. Zudem sind die Überlastmembranen 150, 170, gegen den Messwerkkörper 110 vorgespannt, so dass erstens eine Auslenkung zum Messwerkkörper 110 hin nicht möglich ist und zweitens eine Auslenkung vom Messwerkkörper 110 weg erst dann erfolgt, wenn die Druckdifferenz zwischen der Überlastkammer und der angrenzenden Trennmembrankammer ausreicht, um die Vorspannung der Überlastmembran zu überwinden. Die Überlastmembranen 150, 170 weisen jeweils auf ihrer einer Trennmembran 130, 140 zugewandten Seite ein konturiertes Membranbett auf, um die Trennmembran 130, 140 im Überlastfall abzustützen.

Die Trennmembrankammern 130, 140 und die Überlastkammern 152, 172 sind über hydraulische Pfade gekoppelt, wie folgt. Von der ersten Trennmembrankammer 132 erstreckt sich ein erster hydraulischer Pfad 200, der zumindest abschnittsweise Bohrungen in dem Messwerkkörper 110 umfasst, zur zweiten Überlastkammer 172. Entsprechend erstreckt sich ein zweiter hydraulischer Pfad 210, der zumindest abschnittsweise Bohrungen in dem Messwerkkörper umfasst 110, zur zweiten Überlastkammer 172. Entsprechend erstreckt sich von der zweiten Trennmembrankammer 142 ein zweiter hydraulischer Pfad 210 zur ersten Überlastkammer 152.

Der Differenzdruckmessaufnehmer 100 umfasst weiterhin einen Differenzdruckmesswandler 190, beispielweise eine (piezo-)resistiven Messwandler oder einen kapazitiven Messwandler, der über erste und zweite Kapillarleitungen 202, 212 mit dem ersten hydraulischen Pfad and die beiden hydraulischen Pfade 202, 212 angeschlossen ist, um eine Druckdifferenz zwischen den beiden hydraulischen Pfaden zu erfassen und ein diese Druckdifferenz repräsentierendes elektrisches Primärsignal bereitzustellen.

Für den Differenzdruckmesswandler 190, ist ein Messbereich definiert, der gewöhnlich kleiner ist als ein maximaler Differenzdruck, dem der Differenzdruckmesswandler 190 standhalten kann. Die Vorspannung der Überlastmembranen 150, 170 ist so gewählt, dass sie bei Druckdifferenzen innerhalb des Messbereichs allenfalls vernachlässigbar gering ausgelenkt werden. Wenn jedoch eine Druckdifferenz den Messbereich übersteigt, setzt die Auslenkung der Überlastmembran auf der Seite des kleineren Drucks ein, um Volumen der Übertragungsflüssigkeit der hochdruckseitigen Trennmembrankammer aufzunehmen, so dass die hochdruckseitige Trennmembran an dem hochdruckseitigen Membranbett zur Anlage kommt, wodurch ein weiterer Anstieg der Druckdifferenz am Differenzdruckmesswandler verhindert ist. Die Überlastmembran ist dabei so dimensioniert, dass dieser Zustand eintritt, bevor die Festigkeitsgrenzen des Differenzdruckmesswandlers erreicht werden.

In der Zeichnung sind die Trennmembranen 130, 140 und Überlastmembranen 150, 170 durch Kreisbögen dargestellt. Diese Darstellung hat nichts mit ihrer konkreten Gestalt zu tun, da es in Fig. 1 nur um die funktionale Anordnung der Komponenten des Differenzdruckmessaufnehmers zueinander geht.

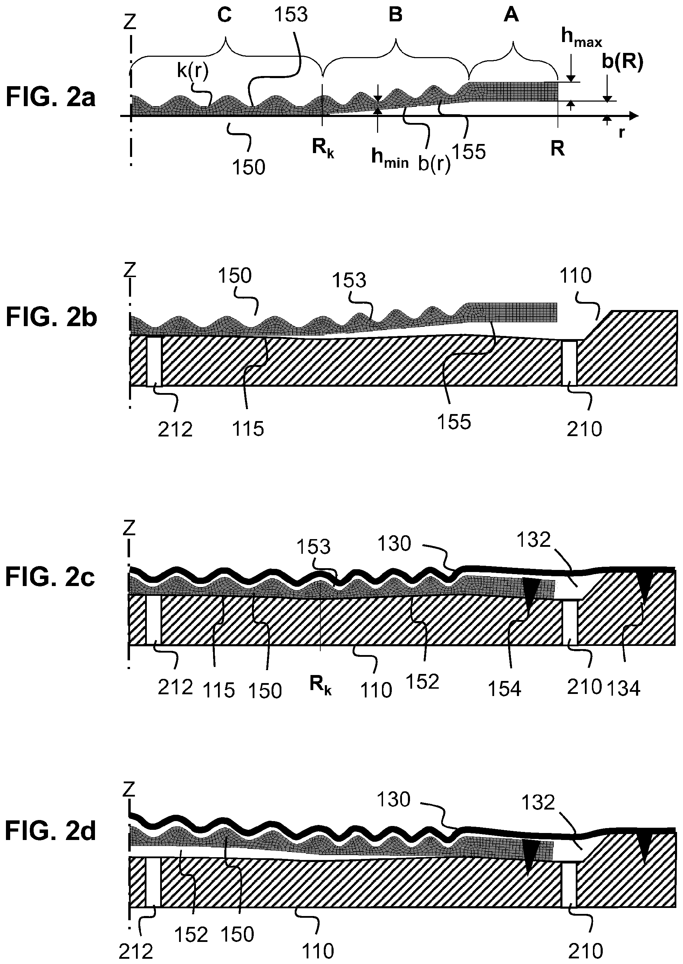

Fign. 2a bis 2d zeigen ein Ausführungsbeispiel einer Überlastmembran 150 eines erfindungsgemäßen Differenzdruckmessaufnehmers in verschiedenen Einbau- und Betriebssituationen. In Fig. 2a ist die freie Überlastmembran 150 im Gleichgewichtszustand, also frei von äußeren Kräften und Momenten gezeigt. Die Überlastmembran ist im wesentlichen Rotationssymmetrisch um die Achse Z. Sie weist einen Radius R zwischen 11 mm und 14 mm auf und hat eine maximale Materialstärke hₘₐₓ von 0,6 mm bis 0,8 mm. Die Überlastmembran 150 weist einen planaren Zentralbereich C und einen planaren Randbereich A auf, wobei sich zwischen beiden ein insbesondere zumindest abschnittsweise kegelstumpfförmiger Übergangsbereich B erstreckt. Die Überlastmembran 150 weist daher eine Basisfläche 150 auf, deren axiale Koordinate b(r) im Gleichgewichtszustand im Zentralbereich konstant ist, beispielsweise Null, und die im Übergangsbereich B gleichmäßig ansteigt auf einen Wert, der etwa 60% bis 80% der maximalen Materialstärke hₘₐₓ der Überlastmembran 150 beträgt. Dieser Wert für b(r) ist dann im Randbereich A konstant und entspricht damit auch dem Wert b(R) am Radius R. Der Übergangsbereich B beginnt bei einem Radius Rₖ der etwa die Hälfte des Radius R beträgt. Die der Basisfläche 155 abgewandte Oberseite der Überlastmembran weist ein Membranbett mit einer (hier wellenförmigen) Kontur k(r) auf, die durch spanende oder umformende Bearbeitung präpariert ist. Die Tiefe der Kontur beträgt hier bis zu etwas mehr als die Hälfte der maximalen Materialstärke hₘₐₓ der Überlastmembran 150. Dem entsprechend beträgt die minimale Materialstärke hₘᵢₙ der Überlastmembran 150, etwas weniger als die maximalen Materialstärke hₘₐₓ. Die Materialstärke h(r) als Funktion des Radius ergibt sich als Differenz der Kontur k(r) und der axialen Koordinate der Basisfläche b(r), also h(r) = k(r) - b(r). Es ist ersichtlich, dass die Materialstärke h(r) mit der Kontur k(r) und praktisch nicht durch b(r) beeinflusst ist. Es wird also mit dem Verlauf der Koordinate b(r) der Basisfläche die elastische Charakteristik der Membran grundsätzlich vorgegeben, wobei die unabhängig davon gestaltete Kontur k(r) dazu dient, einerseits das Membranbett zu bilden und andererseits die Spannungen und Steifigkeit der Überlastmembran zu modellieren.

Fig. 2b zeigt die Überlastmembran 150 über der Gegenfläche 115 eines Messwerkkörpers 110. Hier kommt es im Wesentlichen darauf an, dass die Gegenfläche nicht planar ist, sondern im Zentrum ein Maximum aufweist und nach außen abfällt. Dieser Verlauf der Gegenfläche entspricht ungefähr einer Biegelinie der Überlastmembran 150, wenn die Überlastmembran 150 auf einer planaren Unterlage aufliegt und mit der Basisfläche im Randbereich gegen die planare Unterlage gespannt wird. Tatsächlich wirkt nur in der Umgebung des Radius Rₖ ein Druck auf die Unterlage. Wenn das Zentrum der Gegenfläche 115 also genau der Biegelinie der Basisfläche bei oben beschriebenen Verformung folgt, wird die Überlastmembran dadurch noch nicht abgestützt. Erst eine weitere Erhöhung des Zentrums der Gegenfläche 115 entlastet die Überlastmembran in der Umgebung des Radius Rₖ. Unbeschadet der Frage, ob diese Entlastung erstrebenswert ist, ist eine Annäherung der Gegenfläche 115 an die Biegelinie b(r) erstrebenswert, um die Menge an Übertragungsflüssigkeit in der Überlastkammer zu minimieren. Diesen Erwägungen folgend ist die Gegenfläche 115 gestaltet.

Fig. 2c zeigt einen Ausschnitt des erfindungsgemäßen Differenzdruckmessaufnehmers (100) im betriebsbereiten Zustand bei Druckgleichgewicht. Die Überlastmembran ist 150 ist über einer gemäß den obigen Überlegungen geformten Gegenfläche 115 gespannt und in ihrem Randbereich mit einer umlaufenden Schweißnaht 154 am Messwerkkörper 100 befestigt, so dass zwischen der Überlastmembran 150 und dem Messwerkkörper 100 eine Überlastkammer 152 gebildet ist, die jedoch bei Druckgleichgewicht durch die Vorspannung der Überlastmembran 150 bis auf ein hier nicht dargestelltes Restvolumen zusammengedrückt ist. Über der Überlastmembran 150 ist eine Trennmembran 130 angeordnet die mit einer umlaufenden Schweißnaht 134 am Messwerkkörper 110 fixiert ist, wobei zwischen Messwerkkörper 110 und der Trennmembran 130 eine Trennmembrankammer 132 gebildet ist. Die Trennmembran 130 ist auf dem Membranbett 153 der Überlastmembran abgeprägt. Die Trennmembrankammer 132 kommuniziert ist mit einer hydraulischen Übertragungsflüssigkeit gefüllt und kommuniziert über einen ersten hydraulischen Pfad 210 mit einer zweiten Überlastkammer 172 die baugleich mit der ersten Überlastkammer 152 ist. Die erste Überlastkammer 152 kommuniziert über einen zweiten hydraulischen Pfad 212 mit einer zweiten Trennmembrankammer 142, die baugleich mit der ersten Trennmembrankammer 132 ist.

Fig. 2d zeigt schließlich den Überlastfall, wenn die Differenz zwischen dem Druck in der zweiten Trennmembrankammer 142 bzw. im zweiten hydraulischen Pfad 212 und dem Druck in der ersten Trennmembrankammer 132 einen Grenzwert außerhalb eines für den Differenzdruckmessaufnehmer spezifizierten Messbereich übersteigt. In diesem Fall wird die erste Überlastmembran ausgelenkt und nimmt ein aus der zweiten Trennmembrankammer 142 verdrängtes Volumen an Übertragungsflüssigkeit auf, so dass die zweite Trennmembran an der zweiten Überlastmembran zur Anlage kommt.

Um eine zuverlässige Auslenkung der Überlastmembran 150 zu erleichtern, ist es vorteilhaft, wenn die Gegenfläche 115 der Biegelinie der Basisfläche 155 bei Druckgleichgewicht nur näherungsweise folgt, sodass immer noch eine Restmenge Übertragungsflüssigkeit in der Überlastkammer 152 verbleibt, um den Druck auf die Überlastmembran 150 zu übertragen. Zur Unterstützung können Kanäle in Form von Nuten in der Gegenfläche und/oder der Basisfläche präpariert sein, um die Verteilung der Übertragungsflüssigkeit unter der Überlastmembran zu erleichtern.

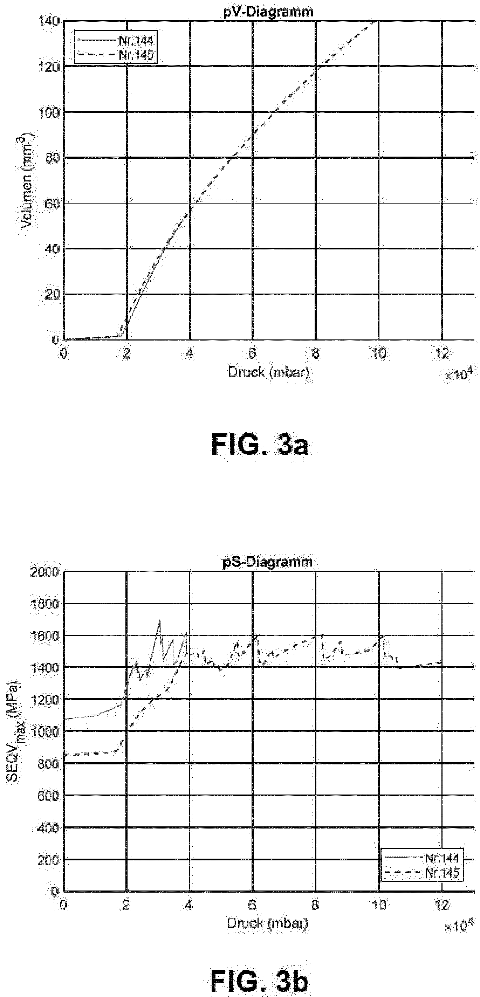

Die Diagramme in Fign. 3a und 3b zeigen Ergebnisse von FEM-Berechnungen zur Überlastmembran aus Fign. 2a bis 2d. Die Überlastmembran weist hierbei einen Federstahl der Sorte 1.8159 auf mit einem experimentell bestimmten Elastizitätsmodul von 195 GPa und einem Rₚ₀₂ von 1,3 GPa. Die Ausgangsmaterialstärke hₘₐₓ wurde mit 700 µm angesetzt und der wirksame Durchmesser der Überlastmembran mit 23,6 mm. Fig. 3a zeigt den Volumenhub der Überlastmembran als Funktion eines Differenzdrucks zwischen den beiden Seiten der Überlastmembran. Demnach ist der Volumenhub bis zu einem Differenzdruck von etwa 1,8 MPa praktisch vernachlässigbar, um dann im Überlastfall sprunghaft anzusteigen, so dass er bei etwa 3,9 MPa etwa 55 µl erreicht. Dies reicht aus, um das vollständige Volumen an Übertragungsflüssigkeit aus der mit der Überlastkammer verbundenen Trennmembrankammer aufzunehmen, um damit einen weiteren Anstieg des Differenzdrucks zu verhindern und den Differenzdruckmesswandler zu schützen. Es hat sich gezeigt, dass es vorteilhaft ist, die Überlastmembran vor der Inbetriebnahme des Differenzdruckmessaufnehmers, beispielsweise bei der Befüllung des Messwerks mit Übertragungsflüssigkeit, einmal mit einem solchen einseitigen Überlastdruck zu beaufschlagen, der den maximal erforderlichen Volumenhub herbeiführt. Dies führt zu leichten Modifikationen der Kennlinie des Volumenhubs als Funktion des Differenzdrucks. Die Überlastmembran wird also marginal plastisch verformt. Die durchgezogene Kennlinie in Fig. 3a repräsentiert diese erste Auslenkung der Überlastmembran, während die gestrichelte Kennlinie für alle weiteren Auslenkungen gilt. Der Effekt dieser ersten Auslenkung wird in Fig. 3b deutlich, welche Resultate von FEM-Berechnungen zu den maximalen Von-Mises-Spannungen in der Überlastmembran als Funktion des Differenzdrucks zeigt. Wiederum gilt die durchgezogene Linie für die erste Auslenkung der Überlastmembran, während die gestrichelte Linie alle weiteren Auslenkungen beschreibt. Bei der ersten Auslenkung sind Spannungsspitzen erkennbar, welche Rₚ₀₂ für den Werkstoff der Überlastmembran überschreiten. Dies führt zu minimalen plastischen Verformungen der Überlastmembran bei der ersten Auslenkung. Bei wiederholten Auslenkungen sind die Spannungsspitzen jedoch weitgehend eliminiert, weshalb damit eine konstante Beziehung zwischen Volumenhub und Differenzdruck erreicht ist. Damit kann der Differenzdruckmesswandler zuverlässig gegen einseitige Überlasten geschützt werden.

## Patentansprüche

1. Differenzdruckmessaufnehmer (100) mit Überlastschutz, umfassend:
einen Messwerkkörper (110);
eine erste Trennmembran (130); eine zweite Trennmembran (140);
eine erste Überlastmembran (150); eine zweite Überlastmembran (170);
einen Differenzdruckmesswandler (190) zum Wandeln einer Druckdifferenz in ein elektrisches Signal;
einen ersten hydraulischen Pfad (200); und einen zweiten hydraulischen Pfad (210);
wobei die erste Überlastmembran (150) unter Bildung einer ersten Überlastkammer (152) mit variablem Volumen entlang eines umlaufenden ersten Überlastmembranrandes (154) mit dem Messwerkkörper (110) verbunden ist;
wobei die zweite Überlastmembran (170) unter Bildung einer zweiten Überlastkammer (172) mit variablem Volumen entlang eines umlaufenden zweiten Überlastmembranrandes (174) mit dem Messwerkkörper (110) verbunden ist;
wobei die erste Trennmembran (130) unter Bildung einer ersten Trennmembrankammer (132) entlang eines umlaufenden ersten Trennmembranrandes (134) mit dem Messwerkkörper (110) verbunden ist,
wobei die erste Überlastmembran (150) zwischen dem Messwerkkörper (110) und der ersten Trennmembran (130) eingeschlossen ist;
wobei die zweite Trennmembran (140) unter Bildung einer zweiten Trennmembrankammer (142) entlang eines umlaufenden zweiten Trennmembranrandes (144) mit dem Messwerkkörper (110) verbunden ist,
wobei die zweite Überlastmembran (170) zwischen dem Messwerkkörper (110) und der zweiten Trennmembran (140) eingeschlossen ist;
wobei die erste Trennmembrankammer (132) über den ersten hydraulischen Pfad (200), der zumindest abschnittsweise durch den Messwerkkörper (110) verläuft, mit der zweiten Überlastkammer (172) hydraulisch verbunden ist;
wobei die zweite Trennmembrankammer (142) über den zweiten hydraulischen Pfad (210), der zumindest abschnittsweise durch den Messwerkkörper (110) verläuft, mit der ersten Überlastkammer (152) hydraulisch verbunden ist;
wobei der Differenzdruckmesswandler (190) mit der ersten Trennmembrankammer (132) und der zweiten Trennmembrankammer (152) hydraulisch verbunden ist;
wobei die erste Überlastmembran (150) eine erste Basisfläche (155) aufweist, welche einer ersten Gegenfläche (115) in der ersten Überlastkammer (152) zugewandt ist;
wobei die zweite Überlastmembran (170) eine zweite Basisfläche (175) aufweist, welche einer zweiten Gegenfläche (117) in der zweiten Überlastkammer (172) zugewandt ist;
wobei die erste Überlastmembran (150) im betriebsbereiten Zustand bei Druckgleichgewicht, also einer Druckdifferenz von Null, derartig gegen die erste Gegenfläche (115) vorgespannt ist, dass die erste Basisfläche (155) zumindest abschnittsweise an der ersten Gegenfläche (115) anliegt;
wobei die zweite Überlastmembran (170) derartig gegen die zweite Gegenfläche (117) vorgespannt ist, dass die zweite Basisfläche (175) zumindest abschnittsweise an der zweiten Gegenfläche (117) anliegt;
wobei die erste Überlastmembran (150) eine radial veränderliche erste Materialstärke h(r) aufweist; und
wobei die zweite Überlastmembran (170) eine radial veränderliche erste Materialstärke h(r) aufweist, **dadurch gekennzeichnet, dass**
die Materialstärke h(r) der ersten Überlastmembran (150) in einem radialen Bereich 0 < r < 0,9 R, lokale Extrema aufweist wobei eine Differenz zwischen einem lokalen Maximum und einem lokalen Minimum der Materialstärke der Überlastmembran (150) nicht weniger als zwei, insbesondere nicht weniger als drei, Materialstärken der ersten Trennmembran (130) beträgt, und/oder wobei ein Betrag einer Differenz eines lokalen Maximums der Materialstärke der Überlastmembran und einer über den radialen Bereich entlang des Radius gemittelten Materialstärke der Überlastmembran nicht weniger als eine Materialstärke, insbesondere nicht weniger als drei halbe Materialstärken, der Trennmembran beträgt.

2. Differenzdruckmessaufnehmer (100), nach Anspruch 1, wobei die erste Überlastmembran eine der Trennmembran zugewandte Membranbettfläche (153) mit einer durch spanende oder umformende Bearbeitung präparierten Kontur k(r) aufweist.

3. Differenzdruckmessaufnehmer nach Anspruch 1 oder 2, wobei die Materialstärke h(r) der Überlastmembran nicht weniger als 4, insbesondere nicht weniger als 6 lokale Maxima aufweist.

4. Differenzdruckmessaufnehmer nach einem der vorhergehenden Ansprüche, wobei die erste Überlastmembran (150) eine der ersten Gegenfläche (115) zugewandte erste Basisfläche (155) und eine der ersten Trennmembran zugewandte erste Membranbettfläche (154) aufweist, wobei die erste Membranbettfläche eine erste Membranbettkontur mit einer axialen Koordinate k(r) aufweist um die erste Trennmembran im Falle einer einseitigen Überlast abzustützen, wobei im betriebsbereiten Zustand bei Druckgleichgewicht, also einer Druckdifferenz von Null für die zweite Ableitung der axialen Koordinate k(r) der ersten Membranbettkontur nach dem d²k/dr² und die zweite Ableitung der ersten Materialstärke h(r) der ersten Überlastmembran nach dem Radius d²h/dr² gilt: $\frac{{\int }_{0}^{g ⋅ R} \frac{{d}^{2} k \left(r\right)}{{dr}^{2}} ⋅ \frac{{d}^{2} h \left(r\right)}{{dr}^{2}} dr}{{\int }_{0}^{g ⋅ R} {\left(\frac{{d}^{2} h \left(r\right)}{{dr}^{2}}\right)}^{2} dr} = T$ wobei g ein Faktor ist, der eine Schranke für die Integration definiert, wobei gilt 0,9 ≤ g ≤ 1 wobei T eine dimensionslose Kennzahl ist, die nicht weniger als 0,9 und insbesondere nicht weniger als 0,95 beträgt.

5. Differenzdruckmessaufnehmer (100), nach Anspruch 4, wobei die erste Basisfläche (155) eine axiale Koordinate b(r) aufweist, wobei, wenn die erste Überlastmembran an der Gegenfläche anliegt, für die zweite Ableitung der axialen Koordinate b(r) der Basisfläche nach dem Radius d²b/dr² und die zweite Ableitung der ersten Materialstärke h(r) der ersten Überlastmembran nach dem Radius d²h/dr² gilt: $\frac{{\int }_{0}^{g ⋅ R} \frac{{d}^{2} h \left(r\right)}{{dr}^{2}} ⋅ \frac{{d}^{2} b \left(r\right)}{{dr}^{2}} dr}{{\int }_{0}^{g ⋅ R} {\left(\frac{{d}^{2} h \left(r\right)}{{dr}^{2}}\right)}^{2} dr} = U$ wobei U eine dimensionslose Kennzahl ist, die nicht mehr als 0,1 und insbesondere nicht mehr als 0,05 beträgt.

6. Differenzdruckmessaufnehmer (100), nach einem der vorhergehenden Ansprüche, wobei die erste Überlastmembran (150), einen ersten zentralen Bereich (C) aufweist dessen äußerer Radius r nicht weniger als 30% insbesondere nicht weniger als 40% des Radius R der Überlastmembran beträgt, wobei an den zentralen Bereich (C) ein erster Übergangsbereich (B) anschließt, der sich über nicht weniger als 20%, beispielsweise nicht weniger als 30% des Radius (R) der ersten Überlastmembran (150) erstreckt, wobei die axiale Koordinate der Basisfläche b(r) im nicht eingebauten Gleichgewichtszustand der ersten Überlastmembran (150) im erste Übergangsbereich (B) eine größere mittlere dimensionslose Steigung R / hₘₐₓ(B) · db(r)/dr aufweist als der erste zentrale Bereich, wobei hₘₐₓ(B) die maximale Stärke der Überlastmembran im Übergangsbereich (B) ist.

7. Differenzdruckmessaufnehmer nach Anspruch 6, wobei eine mit linearer Regression im nicht eingebauten Gleichgewichtszustand der ersten Überlastmembran (150) ermittelte dimensionslose mittlere Steigung R / hₘₐₓ(B) · db(r)/dr des ersten Übergangsbereichs nicht weniger als 1,5 insbesondere nicht weniger als 2 beträgt.

8. Differenzdruckmessaufnehmer (100), nach Anspruch 6 oder 7, wobei der erste Übergangsbereich (B) im nicht eingebauten Gleichgewichtszustand der ersten Überlastmembran (150) eine Kegelstumpfform aufweist.

9. Differenzdruckmessaufnehmer (100), nach einem der Ansprüche 6 bis 7, wobei an den ersten Übergangsbereich radial auswärts ein erster Randbereich (A) anschließt, wobei der erste Randbereich im nicht eingebauten Gleichgewichtszustand der ersten Überlastmembran (150)eine mittlere Steigung 1/(h R) dz(r)/dr aufweist, die nicht mehr als ein Viertel, beispielsweise nicht mehr als ein Achtel der mittleren Steigung des Übergangsbereichs beträgt.

10. Differenzdruckmessaufnehmer (100), nach einem der vorhergehenden Ansprüche,
wobei die erste Basisfläche (155) im nicht eingebauten Zustand der ersten Überlastmembran (150) eine Gleichgewichtsform aufweist, für deren radiusabhängige axiale Koordinate g(r) eine mit linearer Regression ermittelte Gleichgewichtsnäherungsfunktion GN(r) existiert;
wobei die erste Basisfläche (155) im eingebauten betriebsbereiten Zustand der Überlastmembran (150) eine Form aufweist, für deren radiusabhängige axiale Koordinate b(r) eine mit linearer Regression ermittelte Betriebsnäherungsfunktion BN(r) existiert;
wobei die Steigung der Betriebsnäherungsfunktion BN(r) nicht mehr als drei Viertel, und insbesondere nicht mehr als die Hälfte der Steigung der Gleichgewichtsnäherungsfunktion GN(r) beträgt.

11. Differenzdruckmessaufnehmer nach einem der vorhergehenden Ansprüche, wobei für den Differenzdruckmessaufnehmer ein Differenzdruckmessbereich spezifiziert ist, wobei die erste Überlastmembran in einem solchen Maß gegen die Gegenfläche vorgespannt ist, dass bei einer Temperatur von 300 K und einem Differenzdruck, der dem Maximalwert des Differenzdruckmessbereichs entspricht, ein Volumenhub der ersten Überlastmembran nicht mehr als 10% insbesondere nicht mehr als 5% des bei Druckgleichgewicht und Normaldruck in der zweiten Trennmembrankammer enthaltenen Ölvolumens entspricht.

12. Differenzdruckmessaufnehmer (100), nach einem der vorhergehenden Ansprüche, wobei die erste Überlastmembran einen Stahl, insbesondere einen kalt gewalzten Stahl der Sorte 1.4310 oder 1.8159 aufweist.

13. Differenzdruckmessaufnehmer (100), nach einem der vorhergehenden Ansprüche, wobei die erste Überlastmembran vergütet wurde.

14. Differenzdruckmessaufnehmer (100), nach einem der vorhergehenden Ansprüche, wobei die zweite Überlastmembran (170) im Wesentlichen baugleich mit der ersten Überlastmembran (150) ist.

## Claims

1. A differential pressure transmitter (100) with overload protection, comprising:
a measuring mechanism body (110);
a first separating membrane (130); a second separating membrane (140);
a first overload membrane (150); a second overload membrane (170);
a differential pressure measuring transducer (190) for converting a pressure difference into an electrical signal;
a first hydraulic path (200); and a second hydraulic path (210);
wherein the first overload membrane (150) is connected to the measuring mechanism body (110), forming a first overload chamber (152) with a variable volume along a first overload membrane edge (154) around the outside;
wherein the second overload membrane (170) is connected to the measuring mechanism body (110), forming a second overload chamber (172) with a variable volume along a second overload membrane edge (174) around the outside;
wherein the first separating membrane (130) is connected to the measuring mechanism body (110), forming a first separating membrane chamber (132) along a first separating membrane edge (134) around the outside,
wherein the first overload membrane (150) is enclosed between the measuring mechanism body (110) and the first separating membrane (130);
wherein the second separating membrane (140) is connected to the measuring mechanism body (110), forming a second separating membrane chamber (142) along a second separating membrane edge (144) around the outside,
wherein the second overload membrane (170) is enclosed between the measuring mechanism body (110) and the second separating membrane (140);
wherein the first separating membrane chamber (132) is hydraulically connected to the second overload chamber (172) via the first hydraulic path (200), which runs through the measuring mechanism body (110) at least in sections;
wherein the second separating membrane chamber (142) is hydraulically connected to the first overload chamber (152) via the second hydraulic path (210), which runs through the measuring mechanism body (110) at least in sections;
wherein the differential pressure measuring transducer (190) is hydraulically connected to the first separating membrane chamber (132) and the second separating membrane chamber (152);
wherein the first overload membrane (150) has a first base surface (155) which faces toward a first opposite surface (115) in the first overload chamber (152);
wherein the second overload membrane (170) has a second base surface (175) which faces toward a second opposite surface (117) in the second overload chamber (172);
wherein the first overload membrane (150) is pre-tensioned against the first opposite surface (115) when ready for operation at pressure equilibrium, in other words with zero pressure difference, in such a way that the first base surface (155) rests on the first opposite surface (115) at least in sections;
wherein the second overload membrane (170) is pre-tensioned against the second opposite surface (117) in such a way that the second base surface (175) rests on the second opposite surface (117) at least in sections;
wherein the first overload membrane (150) has a first material thickness h(r) which changes in a radial direction; and
wherein the second overload membrane (170) has a first material thickness h(r) which changes in a radial direction, **characterized in that**
the material thickness h(r) of the first overload membrane (150) has local extrema in a radial area 0 < r < 0.9 R, wherein a difference between a local maximum and a local minimum of the material thickness of the overload membrane (150) is equal to no less than two, in particular no less than three, material thicknesses of the first separating membrane (130), and/or wherein an amount of a difference between a local maximum of the material thickness of the overload membrane and a material thickness of the overload membrane calculated over the radial area along the radius is equal to no less than one material thickness, in particular no less than three half material thicknesses, of the separating membrane.

2. The differential pressure transmitter (100) as claimed in claim 1, wherein the first overload membrane has a membrane bed surface (153) facing toward the separating membrane with a contour k(r) prepared by cutting or forming processes.

3. The differential pressure transmitter as claimed in claim 1 or 2, wherein the material thickness h(r) of the overload membrane has not less than 4, in particular not less than 6, local maxima.

4. The differential pressure transmitter as claimed in one of the preceding claims, wherein the first overload membrane (150) has a first base surface (155) facing toward the first opposite surface (115) and a first membrane bed surface (154) facing toward the first separating membrane, wherein the first membrane bed surface has a first membrane bed contour with an axial coordinate k(r) for supporting the first separating membrane in the event of single-sided overload, wherein, when ready for operation at pressure equilibrium, in other words with zero pressure difference, the following applies to the second derivation of the axial coordinate k(r) of the first membrane bed contour according to the radius d² k/dr² and to the second derivation of the first material thickness h(r) of the first overload membrane depending on the radius d²h/dr ²: $\frac{{\int }_{0}^{g ⋅ R} \frac{{d}^{2} k \left(r\right)}{{dr}^{2}} ⋅ \frac{{d}^{2} h \left(r\right)}{{dr}^{2}} dr}{{\int }_{0}^{g ⋅ R} {\left(\frac{{d}^{2} h \left(r\right)}{{dr}^{2}}\right)}^{2} dr} = T$ wherein g is a factor which defines a limit for integration, wherein 0.9 ≤ g ≤ 1 applies, wherein T is a dimensionless quantity which is equal to no less than 0.9, and in particular no less than 0.95.

5. The differential pressure transmitter (100) as claimed in claim 4,
wherein the first base surface (155) has an axial coordinate b(r), wherein, when the first overload membrane rests on the opposite surface, the following applies to the second derivation of the axial coordinate b(r) of the base surface depending on the radius d² b/dr² and to the second derivation of the first material thickness h(r) of the first overload membrane depending on the radius d² h/dr²: $\frac{{\int }_{0}^{g ⋅ R} \frac{{d}^{2} k \left(r\right)}{{dr}^{2}} ⋅ \frac{{d}^{2} h \left(r\right)}{{dr}^{2}} dr}{{\int }_{0}^{g ⋅ R} {\left(\frac{{d}^{2} h \left(r\right)}{{dr}^{2}}\right)}^{2} dr} = T$
wherein U is a dimensionless quantity, which is equal to no more than 0.1, and in particular no more than 0.05.

6. The differential pressure transmitter (100) as claimed in one of the preceding claims, wherein the first overload membrane (150) has a first central area (C) whose outer radius r is equal to no less than 30%, in particular no less than 40%, of the radius R of the overload membrane, wherein a first transition area (B) connects to the central area (C), which extends over no less than 20%, for example no less than 30%, of the radius (R) of the first overload membrane (150), wherein the axial coordinate of the base surface b(r) when the first overload membrane (150) is in an uninstalled equilibrium state has a larger dimensionless slope R / hₘₐₓ(B) · db(r)/dr in the first transition area (B) than in the first central area, wherein hₘₐₓ(B) is the maximum thickness of the overload membrane in the transition area (B).

7. The differential pressure transmitter as claimed in claim 6, wherein a dimensionless average slope R / hₘₐₓ(B) · db(r)/dr of the first transition area calculated using linear regression when the first overload membrane (150) is in an uninstalled equilibrium state is equal to no less than 1, in particular no less than 2.

8. The differential pressure transmitter (100) as claimed in claim 6 or 7, wherein the first transition area (B) when the first overload membrane (150) is in an uninstalled equilibrium state is shaped like a truncated cone.

9. The differential pressure transmitter (100) as claimed in one of claims 6 to 7, wherein a first edge area (A) connects to the first transition area in a radially outward direction, wherein the first edge area when the first overload membrane (150) is in an uninstalled equilibrium state has an average slope 1/(h R) dz(r)/dr which is equal to no more than one quarter, for example no more than one eighth, of the average slope of the transition area.

10. The differential pressure transmitter (100) as claimed in one of the preceding claims,
wherein the first base surface (155), when the first overload membrane (150) is not installed, has an equilibrium form, for whose radius-dependent axial coordinate g(r) an equilibrium approximation function GN(r) calculated using linear regression exists;
wherein the first base surface (155), when the overload membrane (150) is installed and ready for operation, has a form, for whose radius-dependent axial coordinate b(r) an operational approximation function BN(r) calculated using linear regression exists;
wherein the slope of the operational approximation function BN(r) is equal to no more than three quarters, and in particular no more than half, of the slope of the equilibrium approximation function GN(r).

11. The differential pressure transmitter as claimed in one of the preceding claims,
wherein a differential pressure measuring range is specified for the differential pressure transmitter,
wherein the first overload membrane is pre-tensioned against the opposite surface to such an extent that, at a temperature of 300 K and a differential pressure equal to the maximum value of the differential pressure measuring range, a volume stroke of the first overload membrane is equal to no more than 10%, in particular no more than 5%, of the oil volume contained in the second separating membrane chamber at pressure equilibrium and normal pressure.

12. The differential pressure transmitter (100) as claimed in one of the preceding claims,
wherein the first overload membrane has a steel, in particular a cold-rolled steel of grade 1.4310 or 1.8159.

13. The differential pressure transmitter (100) as claimed in one of the preceding claims, wherein the first overload membrane has been tempered.

14. The differential pressure transmitter (100) as claimed in one of the preceding claims, wherein the second overload membrane (170) has essentially the same design as the first overload membrane (150).

## Revendications

1. Capteur de pression différentielle (100) doté d'une protection contre les surpressions, lequel capteur comprend :
un corps de mesure (110) ;
une première membrane de séparation (130) ; une deuxième membrane de séparation (140) ;
une première membrane de protection contre les surpressions (150) ; une deuxième membrane de protection contre les surpressions (170) ;
un transducteur de pression différentielle (190) destiné à convertir une différence de pression en un signal électrique ;
un premier circuit hydraulique (200) ; un deuxième circuit hydraulique (210) ;
la première membrane de protection contre les surpressions (150) étant reliée au corps de mesure (110) le long d'un premier bord périphérique de membrane de protection contre les surpressions (154), formant ainsi une première chambre de protection contre les surpressions (152) à volume variable ;
la deuxième membrane de protection contre les surpressions (170) étant reliée au corps de mesure (110) le long d'un deuxième bord périphérique de membrane de protection contre les surpressions (174), formant ainsi une deuxième chambre de protection contre les surpressions (172) à volume variable ;
la première membrane de séparation (130) étant reliée au corps de mesure (110) le long d'un premier bord périphérique de membrane de séparation (134), formant ainsi une première chambre de membrane de séparation (132),
la première membrane de protection contre les surpressions (150) étant enfermée entre le corps de mesure (110) et la première membrane de séparation (130) ;
la deuxième membrane de séparation (140) étant reliée au corps de mesure (110) le long d'un deuxième bord périphérique de membrane de séparation (144), formant ainsi une deuxième chambre de membrane de séparation (142),
la deuxième membrane de protection contre les surpressions (170) étant enfermée entre le corps de mesure (110) et la deuxième membrane de séparation (140) ;
la première chambre de membrane de séparation (132) étant reliée hydrauliquement à la deuxième chambre de protection contre les surpressions (172) par l'intermédiaire du premier circuit hydraulique (200), lequel circuit s'étend au moins par sections à travers le corps de mesure (110) ;
la deuxième chambre de membrane de séparation (142) étant reliée hydrauliquement à la première chambre de protection contre les surpressions (152) par l'intermédiaire du deuxième circuit hydraulique (210), lequel circuit s'étend au moins par sections à travers le corps de mesure (110) ;
le transducteur de pression différentielle (190) étant relié hydrauliquement à la première chambre de membrane de séparation (132) et à la deuxième chambre de membrane de séparation (152) ;
la première membrane de protection contre les surpressions (150) présentant une première surface de base (155) tournée vers une première surface opposée (115) dans la première chambre de protection contre les surpressions (152) ;
la deuxième membrane de protection contre les surpressions (170) présentant une deuxième surface de base (175) tournée vers une deuxième surface opposée (117) dans la deuxième chambre de protection contre les surpressions (172) ;
la première membrane de protection contre les surpressions (150) étant, à l'état de fonctionnement, en équilibre de pression, c'est-à-dire avec une différence de pression nulle, précontrainte contre la première surface d'appui (115) de telle sorte que la première surface de base (155) repose, au moins par sections, contre la première surface d'appui (115) ;
la deuxième membrane de protection contre les surpressions (170) étant précontrainte contre la deuxième surface d'appui (117) de telle sorte que la deuxième surface de base (175) repose, au moins par sections, contre la deuxième surface d'appui (117) ;
la première membrane de protection contre les surpressions (150) présentant une première épaisseur de matériau h(r) variable radialement ; et
la deuxième membrane de protection contre les surpressions (170) présentant une première épaisseur de matériau h(r) variable radialement,
**caractérisé en ce que** l'épaisseur de matériau h(r) de la première membrane de protection contre les surpressions (150) présente, dans une plage radiale 0 < r < 0,9 R, des extrema locaux, la différence entre un maximum local et un minimum local de l'épaisseur de matériau de la membrane de protection contre les surpressions (150) n'étant pas inférieure à deux, notamment pas inférieure à trois, épaisseurs de matériau de la première membrane de séparation (130), et/ou une valeur absolue d'une différence entre un maximum local de l'épaisseur de matériau de la membrane de protection contre les surpressions et une épaisseur de matériau de la membrane de protection contre les surpressions moyennée sur la plage radiale le long du rayon n'est pas inférieure à une épaisseur de matériau de la membrane de séparation, notamment n'est pas inférieure à trois demi-épaisseurs de matériau de la membrane de séparation.

2. Capteur de pression différentielle (100) selon la revendication 1, pour lequel la première membrane de protection contre les surpressions présente une surface de lit de membrane (153) tournée vers la membrane de séparation, surface dont le contour k(r) a été obtenu par usinage par enlèvement de copeaux ou par formage.

3. Capteur de pression différentielle (100) selon la revendication 1 ou 2, pour lequel l'épaisseur de matériau h(r) de la membrane de protection contre les surpressions présente au moins 4, notamment au moins 6, maxima locaux.

4. Capteur de pression différentielle (100) selon l'une des revendications précédentes, pour lequel la première membrane de protection contre les surpressions (150) présente une première surface de base (155) tournée vers la première surface opposée (115) et une première surface de lit de membrane (154) tournée vers la première membrane de séparation, la première surface de lit de membrane présentant un premier contour de lit de membrane avec une coordonnée axiale k(r) afin de soutenir la première membrane de séparation en cas de surcharge unilatérale, de sorte qu'à l'état de fonctionnement, en équilibre de pression, c'est-à-dire avec une différence de pression nulle, la formule ci-dessous s'applique pour la dérivée seconde de la coordonnée axiale k(r) du premier contour du lit de membrane en fonction du rayon d²k/dr² et la dérivée seconde de la première épaisseur de matériau h(r) de la première membrane de protection contre les surpressions en fonction du rayon d²h/dr² : $\frac{{\int }_{0}^{g ⋅ R} \frac{{d}^{2} k \left(r\right)}{{dr}^{2}} ⋅ \frac{{d}^{2} h \left(r\right)}{{dr}^{2}} dr}{{\int }_{0}^{g ⋅ R} {\left(\frac{{d}^{2} h \left(r\right)}{{dr}^{2}}\right)}^{2} dr} = T$ où g est un facteur définissant une borne pour l'intégration, avec 0,9 ≤ g ≤ 1, T étant un indice adimensionnel qui n'est pas inférieur à 0,9 et notamment n'est pas inférieur à 0,95.

5. Capteur de pression différentielle (100) selon la revendication 4, pour lequel la première surface de base (155) présente une coordonnée axiale b(r), de sorte que, lorsque la première membrane de protection contre les surpressions est en contact avec la surface opposée, la formule ci-dessous s'applique pour la dérivée seconde de la coordonnée axiale b(r) de la surface de base en fonction du rayon d²b/dr² et la dérivée seconde de l'épaisseur de matériau h(r) de la première membrane de protection contre les surpressions en fonction du rayon d²h/dr² : $\frac{{\int }_{0}^{g ⋅ R} \frac{{d}^{2} h \left(r\right)}{{dr}^{2}} ⋅ \frac{{d}^{2} b \left(r\right)}{{dr}^{2}} dr}{{\int }_{0}^{g ⋅ R} {\left(\frac{{d}^{2} h \left(r\right)}{{dr}^{2}}\right)}^{2} dr} = U$ où U est un indice adimensionnel qui n'est pas supérieur à 0,1 et notamment pas supérieur à 0,05.

6. Capteur de pression différentielle (100) selon l'une des revendications précédentes, pour lequel la première membrane de protection contre les surpressions (150) comporte une première zone centrale (C) dont le rayon extérieur r n'est pas inférieur à 30 %, notamment pas inférieur à 40 %, du rayon R de la membrane de protection contre les surpressions, la zone centrale (C) étant suivie d'une première zone de transition (B), laquelle s'étend sur au moins 20 %, par exemple pas moins de 30 % du rayon (R) de la première membrane de protection contre les surpressions (150), la coordonnée axiale de la surface de base b(r) - à l'état d'équilibre lorsque la première membrane de protection contre les surpressions (150) n'est pas montée - présentant dans la première zone de transition (B) une pente adimensionnelle moyenne R / hₘₐₓ(B) · db(r)/dr supérieure à la première zone centrale, hₘₐₓ(B) étant l'épaisseur maximale de la membrane de protection contre les surpressions dans la zone de transition (B).

7. Capteur de pression différentielle (100) selon la revendication 6, pour lequel la pente moyenne adimensionnelle R / hmax(B) · db(r)/dr de la première zone de transition - laquelle pente étant déterminée par régression linéaire à l'état d'équilibre lorsque la première membrane de protection contre les surpressions (150) n'est pas montée - n'est pas inférieure à 1,5, notamment pas inférieure à 2.

8. Capteur de pression différentielle (100) selon la revendication 6 ou 7, pour lequel la première zone de transition (B) présente une forme de tronc de cône à l'état d'équilibre lorsque la première membrane de protection contre les surpressions (150) n'est pas montée.

9. Capteur de pression différentielle (100) selon l'une des revendications 6 à 7, pour lequel la première zone de transition est suivie, radialement vers l'extérieur, d'une première zone marginale (A), cette première zone marginale présentant, à l'état d'équilibre lorsque la première membrane de protection contre les surpressions (150) n'est pas montée, une pente moyenne 1/(h R) dz(r)/dr, laquelle ne représente pas plus d'un quart, par exemple pas plus d'un huitième, de la pente moyenne de la zone de transition.

10. Capteur de pression différentielle (100) selon l'une des revendications précédentes,
pour lequel la première surface de base (155) présente, lorsque la première membrane de protection contre les surpressions (150) n'est pas montée, une forme d'équilibre pour laquelle il existe, pour la coordonnée axiale g(r) dépendant du rayon, une fonction d'approximation d'équilibre GN(r) déterminée par régression linéaire ;
pour lequel la première surface de base (155) présente, lorsque la membrane de protection contre les surpressions (150) est montée et prête à fonctionner, une forme pour laquelle il existe, pour la coordonnée axiale b(r) dépendant du rayon, une fonction d'approximation en régime de fonctionnement BN(r) déterminée par régression linéaire ;
la pente de la fonction d'approximation en régime de fonctionnement BN(r) ne dépassant pas les trois quarts, et notamment pas la moitié, de la pente de la fonction d'approximation d'équilibre GN(r).

11. Capteur de pression différentielle (100) selon l'une des revendications précédentes, pour lequel une gamme de mesure de pression différentielle est spécifiée pour le capteur de pression différentielle, la première membrane de protection contre les surpressions étant précontrainte contre la surface opposée de telle sorte qu'à une température de 300 K et à une pression différentielle correspondant à la valeur maximale de la gamme de mesure de pression différentielle, la course volumique de la première membrane de protection contre les surpressions ne dépasse pas 10 %, notamment ne dépasse pas 5 %, du volume d'huile contenu dans la deuxième chambre de la membrane de séparation en condition d'équilibre de pression et à pression normale.

12. Capteur de pression différentielle (100) selon l'une des revendications précédentes, pour lequel la première membrane de protection contre les surpressions est constituée d'un acier, notamment d'un acier laminé à froid de nuance 1.4310 ou 1.8159.

13. Capteur de pression différentielle (100) selon l'une des revendications précédentes, pour lequel la première membrane de protection contre les surpressions a été trempée.

14. Capteur de pression différentielle (100) selon l'une des revendications précédentes, pour lequel la deuxième membrane de protection contre les surpressions (170) est pour l'essentiel de construction identique à la première membrane de protection contre les surpressions (150).
